# EUROPÄISCHE PATENTANMELDUNG

(11) **EP 1 184 277 A1**
(43) Veröffentlichungstag der Anmeldung: **06.03.2002**
(21) Anmeldenummer: 00118807.7
(22) Anmeldetag: 30.08.2000
(51) Int. Cl.: B62M 7/14

(54) **Elektroantrieb für Fahrrad**

(71) Anmelder: Jeuken, Dieter, 47809 Krefeld (DE)
(72) Erfinder: Jeuken, Dieter, 47809 Krefeld (DE)

(57) **Zusammenfassung**

Der Elektroantrieb für Fahrrad bestehd aus einem Anhänger, der nur ein Rad hat.

Das Rad wird von einem Radnabenmotor angetrieben.

Die Befestigung des Anhängers ist an der Hinderradachse vom Fahrrad mit einer Schnellkupplung angebracht.

In der Anhängerbefestigung befindet sich ein Drehgelenk, senkrecht unmittelbar am Anhänger.

Ein zweites Drehgelenk befindet sich waagerecht an der Hinterradachse vom Fahrrad. ( wo sich auch die Schnellkupplung befindet)

Der Bleiakku wird auf dem Anhänger in eine Arretierung mit einem Spanngurt befestigt.

## Beschreibung

Der Antrieb vom Elektrofahrrad erfolgt durch einen 24V Radnabenmotor, der im Laufrad des kleinen Anhaengers integriet ist. Das Elektrofahrrad wird geschoben, dass heißt **aus jedem Serienfahrrad kann mit zwei Handriffen ein Elektrofahrrad** werden.

### "Schnellkupplung am Fahrrad einrasten und Elektrosteuerung einstecken , das Elektrofahrrad ist betriebsbereit."

Durch den tiefen Schwerpunkt des Akkus koennen normale Bleiakkus mit großem Gewicht und großer Leistung eingesetzt werden z.B. 24V 38 Ah.

Durch den Leistungsstarken 500 Watt Elektromotor wird ohne zusaetzliche Pedalkraft eine Geschwindigkeit von 20km/h und eine mindest Reichweite von 40km erreicht.

Vorteile gegenueber normalen Elektrofahrraedern: Ein echtes elektrogetriebenes Fahrzeug, es muss keine Pedalkraft eingesetzt werden.

Es koennen preiswerte Serienbleiakkus eingesetzt werden.

Keine Beeintraechtigung der Fahrweise durch das Gewicht des Akkus, da tiefer Schwerpunkt.

Nach dem Abbau des Anhaengers besitzt man ein nonnales Fahrrad ohne optische und gewichtsmaessige Veraenderung.

Diese Technik laesst sich mit geringfuegigen Aenderungen auch bei anderen Fahrzeugen z.B. Autos einsetzen.

### Technische Daten

Luftbereifter Anhaenger mit Permanentmagnet- Radnabenmotor

### Leistung: 500 Watt elektronisch geregelt

Elektromotor 350 U/min

### Akku

Wartungsfreien Geelbleiakku 24V 38Ah

### Reichweite

Ohne Pedalkraftunterstuetzung mind. 40 km.

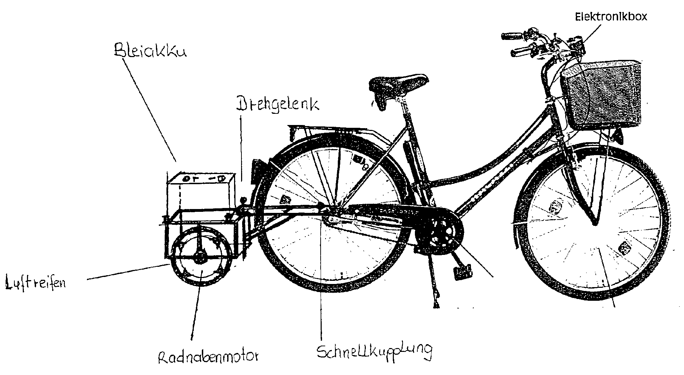

## Patentansprüche

1. Die elektrisch betriebene Antriebsvorrichtung ( Anhaenger) hat nur ein Rad und ist deshalb sehr kompakt.

2. Der im Rad des Anhaengers integriete Radnabenmotor erspart zusaetzliche Uebersetzungsgetriebe und unterstuetzt die Kompaktheit des Anhaengers.

3. Das Drehgelenk am Anhaenger haelt z.B. beim abstellen (Einparken) das Fahrzeug als Einheit beweglich und wirkt sich positiv auf die Fahreigenschaften des Fahrrads aus.

4. Die Befestigung des Anhaengers in der Naehe der Hinterachse des Fahrrads bewirkt, dass durch den Anhaenger die Handhabung und Fahrweise des Fahrrades nicht eingeschraenkt werden, und unterstuetzt die Kompaktheit des Fahrzeugs.
